# DEMANDE DE BREVET EUROPEEN

(11) **EP 1 790 496 A1**
(43) Date de publication de la demande: **30.05.2007**
(21) Numéro de dépôt: 05292495.8
(22) Date de dépôt: 25.11.2005
(51) Int. Cl.: B42D 15/00

(54) **Procédé de fabrication de couvertures de passeport électronique**

(71) Demandeur: Axalto SA, 92120 Montrouge (FR)
(72) Inventeur: Pannier, Didier, 92120 Montrouge (FR); Vere, Denis, 92120 Montrouge (FR); Constant, Amandine, 92120 Montrouge (FR); Fauvet, Alain, 92120 Montrouge (FR); Picault, Michel, 92120 Montrouge (FR); Chabut, Françoise, 92120 Montrouge (FR)
(74) Mandataire: Cour, Pierre

(57) **Abrégé**

Dans un procédé de fabrication d'une feuille 1 de couvertures 2 de passeport ayant au moins une couche intermédiaire 32 à 34 placée entre une couche de couverture et une couche intérieure, la couche intermédiaire est dimensionnée avec une taille inférieure à la taille des couches de couverture et intérieure. Lors du collage par lamination des couches constituant la feuille de couverture, le fluage de la couche intermédiaire se trouve alors contenu dans la feuille de couvertures. Le fluage au dehors de la feuille de couvertures étant supprimé, il n'y a plus de possibilité de collage à l'extérieur de la feuille de couvertures. Les feuilles de couvertures ainsi réalisées comportent une bordure de garde sur le pourtour, dans laquelle se situe le bord de la couche intermédiaire, et elles sont livrables sitôt après l'étape de lamination.

## Description

L'invention se rapporte à un procédé de fabrication de couvertures de passeport électronique.

Pour des raisons de sécurité, les passeports sont, à présent, muni d'un circuit électronique composé d'une puce et d'une antenne. La puce mémorise de manière sécurisée des informations relatives au titulaire du passeport. Les informations sont lues à l'aide d'une communication radio. Le passeport conserve son aspect de livret afin de pouvoir également être lu de manière conventionnelle. Le circuit électronique est placé dans la couverture du passeport.

La couverture du passeport électronique est réalisée de manière multicouche sous forme de feuille de couvertures comportant au moins deux couvertures placées côte à côte. Une couche de couverture constitue la couche extérieure de la couverture du passeport. La couche de couverture est en carton ou en matériau composite et comporte une épaisseur suffisante pour recevoir une marque en relief. Une couche intérieure referme la couverture. La couche intérieure est généralement en papier pour donner l'aspect d'un livret.

Le circuit électronique est placé entre la couche de couverture et la couche intérieure préalablement à l'assemblage du passeport. Le collage de la couche intérieure avec la couche de couverture se fait par lamination de la feuille de couvertures après avoir insérer entre les deux couches le circuit électronique ainsi que des couches intermédiaires. Les couches intermédiaires assurent d'une part un rôle de colle et d'autre part un rôle de compensation d'épaisseur pour le circuit électronique.

Les couches intermédiaires sont par exemple constituées en un matériau polymère, par exemple une résine phénolique ou du polyuréthane. La lamination consiste à chauffer et presser l'ensemble constitué des couches de couverture, intermédiaires et intérieure afin de ramollir les couches intermédiaires et de les faire adhérer par pression. Pour la lamination, les couches constituant les feuilles de couvertures sont placées entre des plaques métalliques avant d'être mises sous presse.

Lors de la lamination d'une feuille de couvertures, il se produit un phénomène de fluage du matériau polymère. Le matériau étant ramolli et pressé, celui-ci déborde de la feuille de couvertures. Ce fluage tend à coller les plaques métalliques utilisées pour la lamination. Le collage des plaques métalliques complique le procédé de fabrication et nécessite un nettoyage des plaques après chaque lamination. En outre, il n'est pas possible de laminer plusieurs feuilles de couvertures entre deux plaques métalliques sans risquer un collage non désiré. Pour y remédier, il est connu de placer des films de protection qui protègent les plaques métalliques. Toutefois, il est nécessaire d'avoir une étape supplémentaire pour retirer les films de protection et pour supprimer le débordement du matériau polymère dû au fluage.

L'invention propose un procédé de fabrication supprimant le fluage au dehors de la feuille de couvertures. A cet effet, les couches intermédiaires sont dimensionnées avec une taille inférieure à la taille des couches de couverture et intérieure. Le fluage se trouve alors contenu dans la feuille de couvertures et il n'y a plus de possibilité de collage à l'extérieur de la feuille de couvertures. Les feuilles de couvertures sont livrables sitôt après l'étape de lamination.

Selon un premier aspect, l'invention est un procédé de fabrication d'une feuille de couvertures de passeport électronique. Le procédé comporte les étapes de :
- placement entre deux plaques de lamination, d'au moins une couche intermédiaire elle-même placée entre une couche de couverture et une couche intérieure, ladite couche intermédiaire ayant une température de ramollissement suffisamment basse pour pouvoir se ramollir sous l'effet de la chaleur sans que cette température n'affecte la couche de couverture ni la couche intérieure,
- chauffage desdites couches à la température de ramollissement, et mise sous pression desdites couches pendant une durée suffisante pour assurer l'adhésion de la couche intermédiaire à la couche de couverture et à la couche intérieure,
- refroidissement de l'ensemble et extraction de la feuille de couvertures ainsi réalisée.

Le procédé se caractérise par des dimensions extérieures de la couche de couverture et de la couche intérieure qui sont identiques alors que des dimensions extérieures de la couche intermédiaire sont inférieures afin qu'un fluage de la couche intermédiaire se produise sous l'effet de la chaleur et de la pression sans déborder des dimensions extérieures de la couche de couverture et de la couche intérieure.

Selon un mode de réalisation préféré, la couche intermédiaire peut être constituée de plusieurs couches de différentes épaisseurs. Des découpes peuvent être réalisées dans certaines desdites couches intermédiaires pour recevoir au moins un circuit électronique et compenser l'épaisseur dudit circuit électronique. Les couches intermédiaires peuvent subir une étape de lamination avec le circuit électronique avant d'être placer entre les couches de couverture et intérieure.

Préférentiellement, le circuit électronique est composé d'un substrat comportant une antenne et supportant un circuit intégré. Une première couche intermédiaire est substantiellement de l'épaisseur du circuit intégré et présente une découpe sensiblement de la taille du circuit intégré. Une deuxième couche intermédiaire est substantiellement de l'épaisseur du substrat et présente une découpe sensiblement de la taille du substrat. Une troisième couche intermédiaire ne présente pas de découpe. La deuxième couche et le substrat sont pris en sandwich entre la première et la troisième couche. La dimension de la couche de couverture est d'une taille suffisante pour réaliser au moins deux couvertures de passeport avec une bordure sur le pourtour. La dimension de la couche intermédiaire est telle, qu'après fluage, la limite de ladite couche intermédiaire se situe dans ladite bordure.

Selon un deuxième aspect, l'invention est une feuille de couvertures de passeport électronique destinée à la réalisation d'au moins deux couvertures de passeport. Ladite feuille comporte une couche de couverture, une couche intérieure et au moins une couche intermédiaire placée entre la couche de couverture et la couche intérieure, les couches étant assemblées par lamination. La dimension de la feuille est telle qu'il est possible de faire au moins deux couvertures de passeports tout en laissant une bordure de garde sur le pourtour de la couverture. Après fabrication de ladite feuille, le bord de la couche intermédiaire se situe dans la bordure de garde.

Selon un mode de réalisation préféré, la couche intermédiaire est réalisée à l'aide d'un matériau polymère de type résine phénolique, polyuréthane ou ayant une phase thermoplastique.

L'invention sera mieux comprise, et d'autres particularités et avantages apparaîtront à la lecture de la description qui va suivre, la description faisant référence aux dessins annexés, parmi lesquels :
les figures 1 et 2 représentent des feuilles de couvertures de passeport selon l'invention,
la figure 3 représente une vue en coupe d'une feuille de couvertures de passeport selon l'invention,
les figures 4 et 5 illustrent la découpe d'une couche intermédiaire d'une feuille de couvertures de passeport,
les figures 6 et 7 illustrent les étapes de lamination réalisée selon l'invention, et
la figure 8 illustre une feuille de couvertures après lamination.

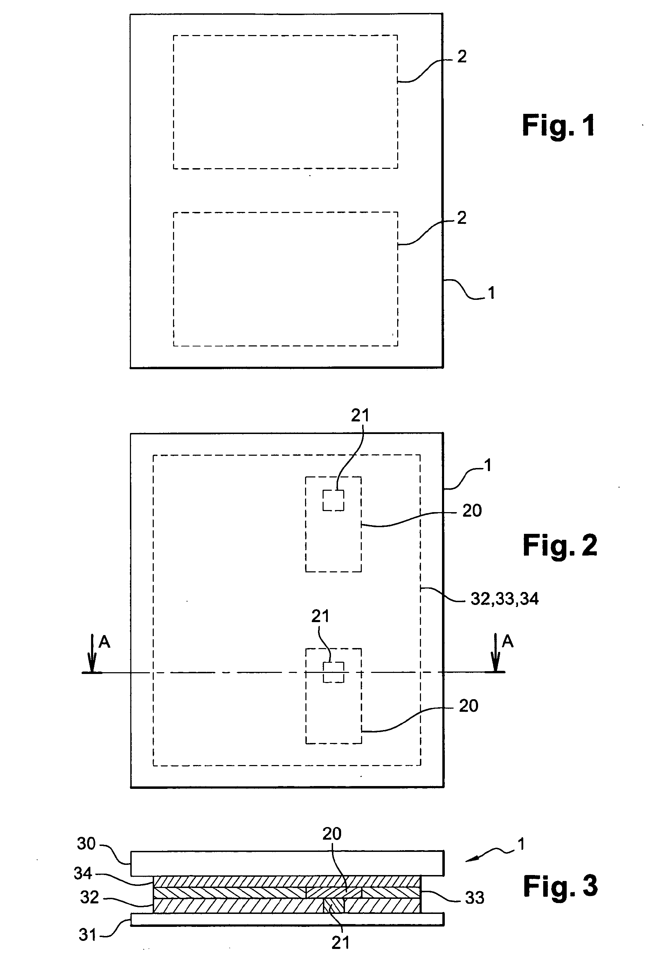

Pour des raisons pratiques et afin de rendre plus visibles certains détails de l'invention, les dessins des figures 1 à 8 ne sont pas réalisés à l'échelle. Pour des raisons pratiques les mêmes références sont utilisées sur les figures pour désigner des éléments identiques ou de même nature.

Les couvertures de passeport sont réalisées et imprimées sur des feuilles de couvertures comportant généralement deux ou trois couvertures. A titre d'exemple, la feuille de couvertures 1, représentée sur la figure 1, comporte deux couvertures 2. Les couvertures sont placées en retrait des bords de la feuille de couvertures 1 afin de permettre une recoupe de couverture après l'assemblage du passeport pour ajuster la couverture et le livret, selon une technique bien connue dans l'imprimerie.

La feuille de couvertures est réalisée à l'aide d'une pluralité de couches enserrant des circuits électroniques composés chacun d'un substrat 20, muni d'une antenne, et d'un circuit intégré 21 relié à l'antenne et solidaire dudit substrat 20. Comme montré sur la figure 2, chaque couverture 2 comporte son propre circuit électronique.

La feuille de couvertures 1 est une feuille composite principalement composée de trois couches. Une couche de couverture 30 constitue la couverture extérieure du passeport. La couche de couverture 30 est une couche épaisse, par exemple de 330 µm d'épaisseur, réalisée en carton ou dans une matière équivalente. La couche de couverture 30 peut être imprimée en relief avant ou après la réalisation de la feuille de couvertures 1.

Une couche intérieure 31 constitue la partie se trouvant à l'intérieure du passeport. Cette couche intérieure est préférentiellement une mince couche de papier, par exemple d'une épaisseur de 80 µm. Lors de l'assemblage du passeport, une feuille de garniture peut être collée sur cette couche intérieure 31 selon une méthode conventionnelle d'imprimerie.

Des couches intermédiaires 32 à 34 assurent le collage de la couche de couverture 30 avec la couche intérieure 31. En outre, les couches intermédiaires 32 à 34 servent à contenir le circuit électronique et à éviter d'avoir une bosse dans la couverture du passeport au niveau du circuit électronique. A cet effet, les couches intermédiaires sont des couches réalisées dans un matériau pouvant assurer d'une part le collage des différentes couches entre elles tout en conservant une épaisseur déterminée. Les couches intermédiaires 32 à 34 sont par exemple réalisées dans un matériau polymère dont la température de ramollissement est inférieure à une température qui pourrait altérer les couches de couverture 30 et intérieure 31. Le collage des couches 30 à 34 se fait alors par un procédé de lamination, ou pressage à chaud, réalisé à la température de ramollissement des couches intermédiaires 32 à 34.

Une seule couche intermédiaire pourrait suffire. Cependant, pour épouser au mieux la forme du circuit électronique tout en assurant un excellent collage, les couches intermédiaires 32 à 34 sont par exemple au nombre de trois. Une première couche intermédiaire 32 est une couche dont l'épaisseur est sensiblement égale ou légèrement inférieure à l'épaisseur du circuit intégré 21. A titre d'exemple, la première couche intermédiaire 32 est par exemple une couche de 210 µm d'épaisseur. La première couche intermédiaire 32 comporte en outre des ouvertures dont la taille et la position correspondent à la taille et à l'emplacement des circuits intégrés 21 afin que ceux-ci viennent se positionner dans lesdites ouvertures. Préférentiellement, le matériau polymère est une résine phénolique mais on pourrait également utiliser du polyuréthane ou d'autres matériau thermoplastique.

Une deuxième couche intermédiaire 33 est une couche dont l'épaisseur est sensiblement égale à l'épaisseur du substrat 20. A titre d'exemple, la deuxième couche intermédiaire 33 est par exemple une couche de 70 µm d'épaisseur réalisée dans le même matériau que la première couche intermédiaire 32. La deuxième couche intermédiaire 33 comporte en outre des ouvertures dont la taille et la position correspondent à la taille et à l'emplacement des substrats 20 afin que ceux-ci viennent se positionner dans lesdites ouvertures.

Une troisième couche intermédiaire 34 est une couche fine qui sert à assurer un collage homogène, notamment au niveau des substrats 20. Cette troisième couche intermédiaire 34 est par exemple une couche de 70 µm d'épaisseur et elle est réalisée dans le même matériau que les première et deuxième couches intermédiaires 32 et 33.

Les première à troisième couches 32 à 34 ont une dimension extérieure inférieure à la dimension extérieure des couches de couverture 30 et intérieure 31 afin qu'un fluage d'une ou plusieurs des couches intermédiaires 32 à 34 reste contenu entre la couche de couverture 30 et la couche intérieure 31. Dans la pratique, les couches de couverture 30, intérieure 31 et intermédiaires 32 à 34 sont fournies à des dimensions correspondant à un standard d'imprimerie et ces feuilles ont la même dimension. Il convient donc de retailler les couches intermédiaires 32 à 34.

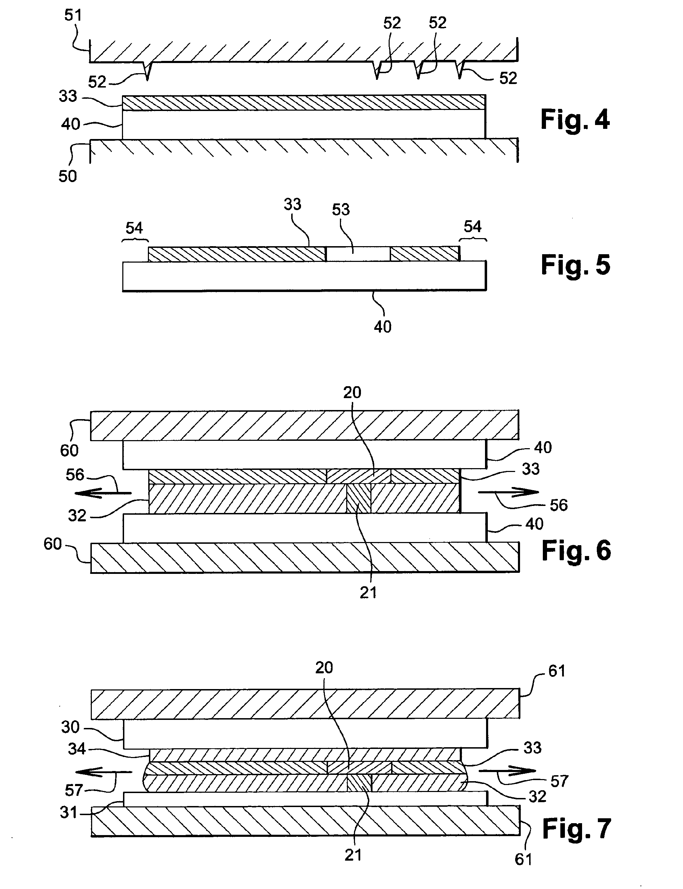

La figure 4 illustre la retaille d'une couche intermédiaire, par exemple la deuxième couche intermédiaire 33. La couche intermédiaire 33 est solidaire d'une feuille ou d'un film de transport 40 de même dimension. La feuille ou le film de transport 40 et la couche intermédiaire sont placées sur un bâti 50. Une forme de poinçonnage 51 vient alors presser la couche intermédiaire 33 et la feuille de transport 40. Pour effectuer la découpe, la forme de poinçonnage 51 comporte des couteaux 52 dont la forme correspond aux découpes à effectuer sur la couche intermédiaire 33. Les découpes à effectuer sont le trou 53 destiné à recevoir le substrat 20 et le retrait de la bordure 54 destinée à réduire la taille de la couche intermédiaire 33 par rapport à la taille de la couche de couverture 30. Afin de ne pas découper la feuille de transport 40, les couteaux ont une longueur sensiblement égale à l'épaisseur de la couche intermédiaire 33 à retailler. Lorsque la forme de poinçonnage 51 est appuyée en direction du bâti 50, les couteaux 52 pénètrent et coupent la couche intermédiaire 33 mais pas la feuille ou le film de transport 40. En éloignant, la forme de poinçonnage 51, on obtient alors la couche intermédiaire 33 retaillée pour être utilisée, comme montré sur la figure 5. Bien entendu, la retaille des couches intermédiaire 32 à 34 pourrait être réalisée autrement.

A titre préféré, la lamination est effectuée en deux phases. Au cours d'une première phase, représentée sur la figure 6, les première et deuxième couches intermédiaires 32 et 33 sont laminées avec les circuits électroniques pour assurer un pré-collage desdits éléments. Lors de cette première phase, les première et deuxième couches intermédiaires 32 et 33 sont maintenues entre leurs feuilles de transport 40 respectives afin de contenir le fluage, matérialisé par les flèches 56. Ainsi, les plaques métalliques 60 peuvent être chauffées et mises sous pression sans être en contact avec les couches intermédiaires 32 et 33. Il est à noter que les couches de transport 40 sont réalisées en un matériau réfractaire au matériau constituant les couches intermédiaires 32 à 34 mais permettant une adhésion relative. A titre d'exemple, les feuilles ou films de transport 40 sont par exemple réalisée en papier enduit, en PET ou en PE, et l'adhésion se fait par enduction ou par coextrusion.

A l'issue de cette première phase, on obtient une couche intermédiaire constituée des première et deuxième couches intermédiaires 32 et 33 et incluant les circuits électroniques. Cette couche constituée est plus facile à manipuler pour la deuxième phase. Cependant, il est possible de ne pas effectuer cette première phase.

Dans une deuxième phase, on retire les feuilles de transport 40 des couches intermédiaires 32 à 34 et on place entre deux plaques métalliques 61 toutes les couches constituant la feuille de couverture 1, à savoir la couche de couverture 30, la couche intérieure 31, les couches intermédiaires 32 à 34 ainsi que les circuits électroniques composés de substrats 20 et de circuits intégrés 21. L'ensemble est ensuite chauffé et mis sous pression, par l'intermédiaire des plaques métalliques 61, pendant une durée suffisante pour assurer un collage homogène de toutes les couches entre elles. Un fluage, représenté par les flèches 57, se produit pendant le pressage.

Le fluage 57 des couches intermédiaires 32 à 34 dépend d'un grand nombre de paramètres tels que le matériau constitutif de la couche, la température effective, la pression exercée, le temps de lamination, la position de la couverture, l'état d'usure des plaques métalliques 60 et 61 assurant le pressage de la feuille de couvertures, les éventuels défauts dans la couche de couverture 30 ou dans la couche intérieure 31, ainsi que d'autres paramètres non encore identifiés. La caractérisation du fluage est quelque chose de relativement complexe et, à ce jour, il n'existe pas de modèle applicable à ce fluage. Il convient de réaliser une caractérisation statistique sur un certain nombre de feuilles de couvertures pour déterminer la largeur minimale de bordure permettant d'être sûr que le fluage reste contenu dans la feuille de couvertures. Toutefois, cette bordure doit également être la plus petite possible afin d'être dans la bande de recoupe de couverture sans nécessiter de surdimensionnement des feuilles de couverture. A titre d'exemple, pour des couches intermédiaires 32 à 34 réalisées en résine phénolique et ayant les épaisseurs indiquées et une taille de couche de couverture de 210 mm par 304,8 mm permettant de réaliser deux couvertures, une bordure de 6 mm convient.

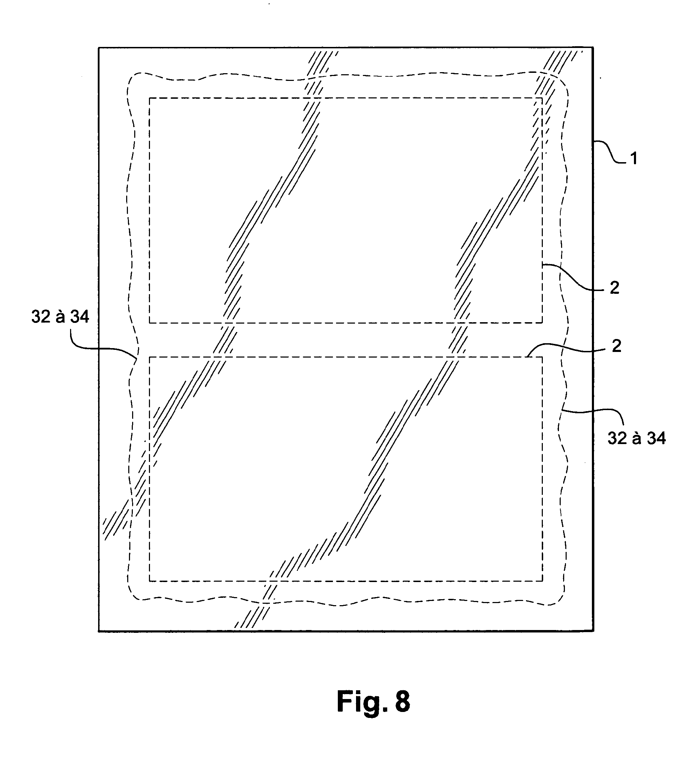

La feuille de couverture 1 obtenue par le procédé décrit précédemment est représentée sur la figure 8. Le bord des couches intermédiaires 32 à 34 lié au fluage est irrégulier mais en dehors des couvertures de passeport 2. La recoupe des couvertures 2 effectuée lors de l'assemblage du passeport éliminera la zone de bordure dans laquelle le fluage est réalisé et la couverture du passeport se trouvera alors parfaitement collée.

## Revendications

1. Procédé de fabrication d'une feuille (1) de couvertures (2) de passeport électronique qui comporte les étapes de :
- placement entre deux plaques de lamination (61), d'au moins une couche intermédiaire (32 à 34) elle-même placée entre une couche de couverture (30) et une couche intérieure (31), ladite couche intermédiaire ayant une température de ramollissement suffisamment basse pour pouvoir se ramollir sous l'effet de la chaleur sans que cette température n'affecte la couche de couverture ni la couche intérieure,
- chauffage desdites couches (30 à 34) à la température de ramollissement, et mise sous pression desdites couches pendant une durée suffisante pour assurer l'adhésion de la couche intermédiaire à la couche de couverture et à la couche intérieure,
- refroidissement de l'ensemble et extraction de la feuille (1) de couvertures ainsi réalisée,
**caractérisé en ce que** les dimensions extérieures de la couche de couverture (30) et de la couche intérieure (31) sont identiques alors que les dimensions extérieures de la couche intermédiaire (32 à 34) sont inférieures afin qu'un fluage (57) de la couche intermédiaire se produise sous l'effet de la chaleur et de la pression sans déborder des dimensions extérieures de la couche de couverture et de la couche intérieure.

2. Procédé selon la revendication 1, dans lequel la couche intermédiaire est constituée de plusieurs couches (32 à 34) de différentes épaisseurs, des découpes ayant été réalisées dans certaines desdites couches (32, 33) intermédiaires pour recevoir au moins un circuit électronique (20, 21) et compenser l'épaisseur dudit circuit électronique.

3. Procédé selon la revendication 2, dans lequel les couches intermédiaires (32, 33) subissent une étape de lamination avec le circuit électronique (20, 21) avant d'être placer entre les couches de couverture et intérieure.

4. Procédé selon la revendication 2 ou 3, dans lequel :
- le circuit électronique est composé d'un substrat (20) comportant une antenne et supportant un circuit intégré (21),
- une première couche intermédiaire (32) est substantiellement de l'épaisseur du circuit intégré et présente une découpe sensiblement de la taille du circuit intégré,
- une deuxième couche intermédiaire (33) est substantiellement de l'épaisseur du substrat et présente une découpe sensiblement de la taille du substrat, et
- une troisième couche intermédiaire (34) qui ne présente pas de découpe,
et dans lequel la deuxième couche (33) et le substrat (20) sont pris en sandwich entre la première (32) et la troisième couche (34).

5. Procédé selon l'une des revendications précédentes, dans lequel la dimension de la couche de couverture (30) est d'une taille suffisante pour réaliser au moins deux couvertures (2) de passeport avec une bordure sur le pourtour, et la dimension de la couche intermédiaire est telle, qu'après fluage, la limite de ladite couche intermédiaire se situe dans ladite bordure.

6. Procédé selon l'une des revendications précédentes, dans lequel la couche intermédiaire (32 à 34) est réalisée à l'aide d'un matériau polymère de type résine phénolique, polyuréthane ou ayant une phase thermoplastique.

7. Feuille (1) de couvertures de passeport électronique destinée à la réalisation d'au moins deux couvertures (2) de passeport, ladite feuille comportant une couche de couverture (30), une couche intérieure (31) et au moins une couche intermédiaire (32 à 34) placée entre la couche de couverture et la couche intérieure, les couches étant assemblées par lamination, **caractérisée en ce que** la dimension de la feuille est telle qu'il est possible de faire au moins deux couvertures (2) de passeports tout en laissant une bordure de garde sur le pourtour de la couverture, et **en ce que**, après fabrication de ladite feuille, le bord de la couche intermédiaire (32 à 34) se situe dans la bordure de garde.

8. Feuille de couverture selon la revendication 7, dans laquelle la couche intermédiaire (32 à 34) est réalisée à l'aide d'un matériau polymère de type résine phénolique, polyuréthane ou ayant une phase thermoplastique.
